Europäisches Patentamt

(19) European Patent Office

Office européen des brevets

(11) Numéro de publication: **0 293 536**
B1

(12) # FASCICULE DE BREVET EUROPEEN

(45) Date de publication du fascicule du brevet:
11.07.90

(21) Numéro de dépôt: 87402223.9

(22) Date de dépôt: 07.10.87

(51) Int. Cl.⁵: **A23L 1/31**, A23L 1/314,
A23L 1/315

(54) **Produit agro-alimentaire industriel et son procédé de préparation.**

(43) Date de publication de la demande:
07.12.88 Bulletin 88/49

(45) Mention de la délivrance du brevet:
11.07.90 Bulletin 90/28

(84) Etats contractants désignés:
AT BE CH DE ES FR GB GR IT LI LU NL SE

(56) Documents cités:
DE-U- 8 405 558
FR-A- 2 289 122
FR-A- 2 366 803

(73) Titulaire: **Benhalima, Abdelhakim, Hotel Montyon 15 Rue Montyon, F-75009 Paris(FR)**

(72) Inventeur: **Benhalima, Abdelhakim, Hotel Montyon 15 Rue Montyon, F-75009 Paris(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

Notre invention porte sur un produit agro-alimentaire industriel que nous nous proposons de lancer sur le marché et sur son procédé de fabrication.

Il s'agit d'un produit agro-alimentaire surgelé prêt à être consommé fabriqué à partir d'un ensemble de produits alimentaires traités conformement aux normes gastronomiques.

Notre produit agro-alimentaire est obtenu à partir des éléments suivants :

a) Feuilles de pâtes semi-cuites de 0,5 mm d'epaisseur.
* 2 Feuilles de pâtes généralement de 28 cm de diamètre.
* 6 ou 7 Feuilles de pâtes généralement de 17 cm de diamètre.
b) Viande de poulet.
c) Sauce delégumes.
d) Un oeuf.
e) Viande hachée.
f) Viande de poulet plus sauce d'oignon et de persil
g) Eventuellement amandes.

## A) MODALITES DE PREPARATION DES MATIERES COMPOSANT LE PRODUIT

Le produit agro-alimentaire est composé de couches de matières alimentaires citées précédemment.

a) Les feuilles de pâtes semi-cuites : elles sont préparées à partir de la farine supérieure, oeuf, sel, l'huile antifongique et sorbate de potassium.
On étale une feuille de pâte de 28 cm de diamètre au centre de laquelle on étale une autre feuille de pâte de 17 cm de diamètre.
La première couche d'aliments sera étalée sur cette dernière.
b) Première couche : Viande de poulet en miette.
La viande de poulet est cuite avec de l'oignon, de l'huile , du poivre noir, du gingembre, du cannelle et du sel.
c) Deuxième couche : Sauce d'oignon.
Elle est obtenue à partir de la préparation de la viande de poulet ( voir plus haut ) à laquelle on ajoute du persil.
d) Troisième couche : oeuf à moitie cuit avec une noix de beurre et du sel
e) Quatrième couche : Viande ( boeuf)hachée .
Elle est mélangée et cuite avec de l'oignon, du persil, du poivre noir, du poivre rouge, du sel, du gingembre, de l'ail et de l'huile.
f) Cinquième couche : Elle est constituée d'un mélange de sauce de l'oignon et de persil avec de la viande de poulet cuite en miette (voir deuxième et troisième couche).
g) Pour obtenir un produit agro-alimentaire aux amandes, il y a lieu d'ajouter une sixième couche composée de pâte d'amandes moulues et traitées avec du sucre, du cannelle et de l'eau de fleur .

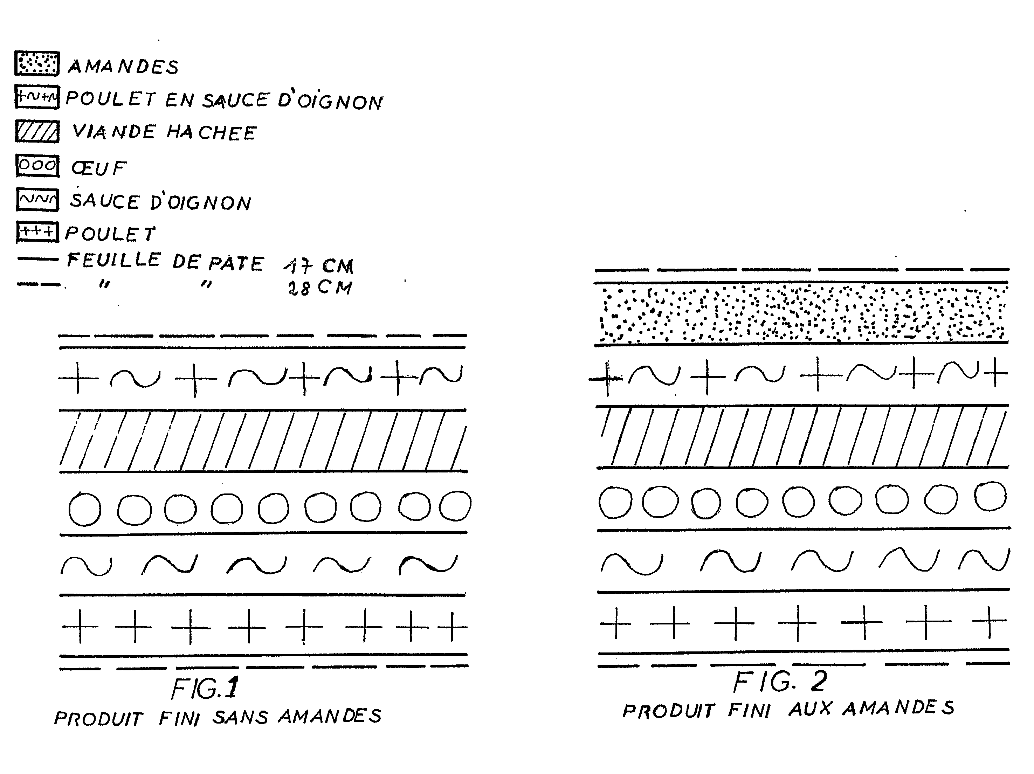

Ainsi nous aurons obtenu un produit agro-alimentaire constitué de cinq couches ou six couches (produit alimentaire aux amandes ) de varieté de matières alimentaires ( voir fig. 1 et 2 ).

1) Couche de viande de poulet .
2) Couche de sauce d'oignon et de persil.
3) Couche d'oeuf.
4) Couche de viande (boeuf) hachée.
5) Couche de viande de poulet plus la sauce d'oignon et de persil
6) Et pour le produit agro-alimentaire aux amandes, une couche de pâte d'amandes.

Aprés chaque couche de produits on étale une feuille de pâte de 17 cm de diamètre.
Une deuxième feuille de pâte de 28 cm de diamètre est étalée sur la partie supérieure du produit. Elle servira avec celle étalée au dessous de la première couche d'aliments ( Voir chap. A a )à envelopper le produit agro-alimentaire.

## B)LES NORMES DE PREPARATION :

a) Produit agro-alimentaire sans amandes : Poids du produit fini = 300 g.

MATIERES :

1) 60 g de viande de poulet .
2) 80 g Sauce d'oignon et du persil.
3) 30 g d'oeuf.
4) 60 g de viande hachée .
5) 60 g de viande de poulet plus sauce d'oignon et persil
6) 10 g de feuille de pâte.

b) Produit agro-alimentaire aux amandes : Poids du produit fini 360 g.

MATIERES :

1) 60 g de viande de poulet.
2) 80 g de sauce d'oignon et du persil.
3) 30 g d'oeuf.
4) 60 g de viande hachéé.
5) 60 g de viande de poulet plus sauce d'oignon et persil
6) 60 g de pâte d'amande.
7) 10 g de feuille de pâte.

Le produit agro-alimentaire obtenu aura une forme carré de demension :
Côté = 15 cm
Epaisseur = 2cm ou 2,5 cm ( Produit aux amandes).

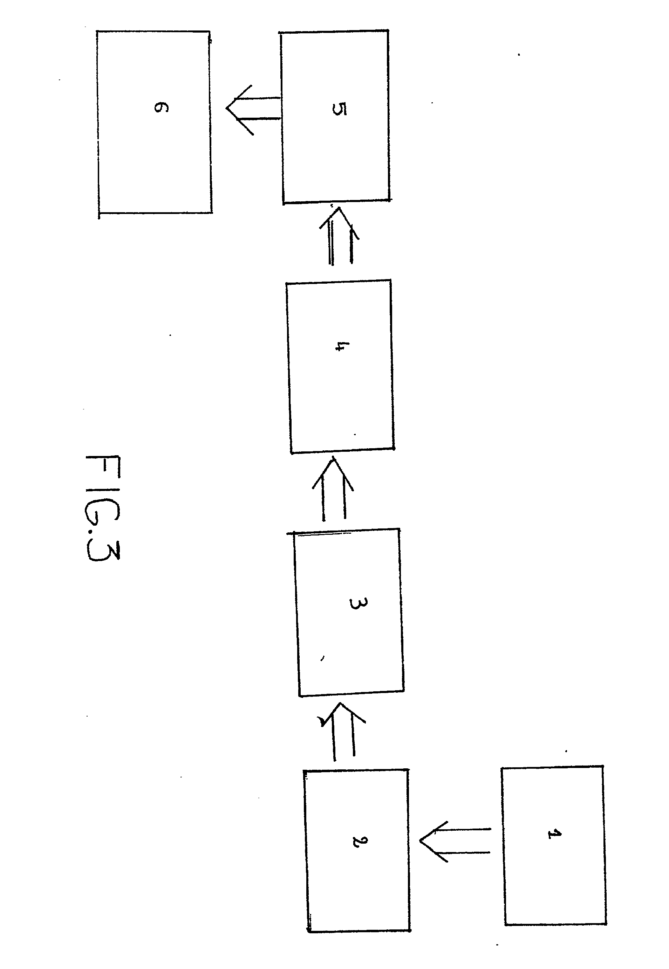

## C) Processus de fabrication (fig.3)

Le produit agro-alimentaire, pour sa fabrication, doit passer par un processus de production conçu en six étapes:

1°-Etape de préparation et de traitement de la matière première

Elle consiste en la préparation des différentes couches.

a) Couche de viande de poulet : elle est cuite avec de l'oignon, de l'huile, du poivre noir, du gingembre, de la cannelle et du sel, pendant une durée d'environ 40 minutes.
b) Couche de sauce de l'oignon : sauce obtenue à partir de la préparation de la viande de poulet à laquelle on ajoute directement du persil.
c) Couche d'oeuf : à moitié cuit avec du sel. Durée de cuisson 1 minute.
d) Couche de viande hachée (boeuf) : cuite et mélangée avec de l'ail, du persil, du poivre noir, du poivre rouge, du sel, du gingembre et de l'huile. Durée de cuisson cinq minutes environ.
e) Couche de viande de poulet saucée : constituée d'un mélange de la première et la deuxième couche.
f) Couche de pâte d'amande : elle est préparée sans cuisson à partir des éléments suivants : des amandes moulues, de la cannelle, du sucre et de l'eau de fleur d'oranger.

Les coupes du produit fini sont montrées en planche 1/2, Fig. 1 et 2.
N.B. : Les durées de cuisson peuvent varier en fonction des caractéristiques techniques de la chaîne de fabrication qui sera mise en place.

2°-Etape de la composition et de l'assemblage des différentes matières

Elle consiste en l'assemblage des différentes couches préparées et constituées en première étape.

3°-Etape de cuisson du produit fini

Dans cette étape, le produit fini passe par un four pendant une durée de 12 minutes environ pour la cuisson des feuilles qui servent à envelopper le produit.
N.B. : Les durées de cuisson citées plus haut peuvent varier en fonction des caractéristiques techniques de la chaîne de fabrication qui sera mise en place.

4°- Etape de l'emballage

Les types d'emballage envisagés pour le produit fini sont:
- le plastique
- l'aluminium.

5°- Etape de surgélation

La durée de la surgélation est fonction des caractéristiques de la chaîne qui sera mise en place.

6°-Etape de conservation et stockage avant livraison du produit fini.

**Revendications**

1. Procédé de préparation d'un produit agro-alimentaire caractérisé en ce qu'il consiste à introduire plusieurs couches de matières alimentaires pré-cuites entre des feuilles de pâtes de 0,5 mm d'épaisseur semi-cuites superposées et en ce qu'il compose des couches de produits suivants:
 – feuille de pâte
 – viande de poulet
 – feuille de pâte
 – sauce d'oignon et de persil
 – feuille de pâte
 – œuf
 – feuille de pâte
 – viande hachée
 – feuille de pâte
 – viande de poulet plus sauce d'oignon et de persil
 – feuille de pâte,
le tout étant ensuite enrobé dans des feuilles de pâtes semi-cuites de 0.5 mm d'épaisseur et laissé au four pendant 12 minutes environ pour la cuisson de ces dernières qui servent à envelopper le produit, qui est enfin surgelé prêt à être consommé.

2. Produit agro-alimentaire préparé selon la revendication (1) caractérisé en ce qu'il comporte en plus une couche d'amandes moulus traitées avec du sucre, de la cannelle et de l'eau de fleur d'oranger.

3. Produit agro-alimentaire selon la revendication précédente, caractérisé en ce que les feuilles de pâtes sont préparées à base de farine supérieure, œuf, de sel, d'huile anti-fongique, et sorbate de potassium.

**Claims**

1. Process of preparation of an agro-alimentary product, consists many alimentary matters strata meadow backed inserted in between paste sheets of a 0,5 mm thickness half backed and superposed.
 These strata of product are composed of:
 – Sheet of paste
 – Chicken
 – Sheet of paste
 – Onion and persley sauce
 – Sheet of paste
 – Egg
 – Sheet of paste
 – Minced meat
 –Sheet of paste
 – Chicken added to onion and persley sauce
 – Sheet of paste
 The whole is let in the oven for about 12 minutes.

2. Agro-alimentary product prepared according to claim (1) it consists besides agrinded almonds stratum treated with sugar, cinnamon and orange flower water (l'eau de fleur oranger).

3. Agro-alimentary product according the previous claim consists of sheets of paste prepared with a high quality flour, Egg, salt, antifongic oil (oil anti-mushroom) and potassium sorbate.

**Patentansprüche**

1. Verfahren für das Zubereiten eines landwirtschaftlichen Nahrungsprodukts.

Dieses Produkt wird erhalten durch das Einführen von Schichten von vorgebackenen Nahrungsstoffen zwischen halbgebackenen aufgeschichteten Teigblättern, deren Dicke 0,5 mm werden und es besteht aus folgenden Schichten von Produkten.
   – Teigblatt
   – Hähnchenfleisch
   – Teigblatt
   – Zwiebel und Petersiliensosse
   – Teigblatt
   – Ei
   – Teigblatt
   – Hackfleisch
   – Teigblatt
   –Hähnchenfleisch und Zwiebel und Petersilien - sosse
   – Teigblatt

Das ganze (alles) wird dann etwa 12 Minuten in den Backofen gestellt zum Backen der Teigblätter, dann erfolgt die Tiefkühlung und dann ist das Produkt zum Konsum bereit.

2. Man könnte eventuell eine andere Schicht hinzufügen, die aus gemahlenen Mandeln, Zucker, Zimt, "L'eau de fleur d'oranger" (= Extrakt von Orangenblüten, gelöst im Wasser) bestehen.

3. Die Teigblätter sollen aus Mehl hoher Qualität, Eier, Salz, "Huile anti-fongique" (= Öl gegen Pilzbildung) und Kalium Sorbat "Sorbate de potassium" bestehen.

EP 0 293 536 B1

AMANDES

POULET EN SAUCE D'OIGNON

VIANDE HACHEE

ŒUF

SAUCE D'OIGNON

POULET

—— FEUILLE DE PATE  17 CM
—·—    "      "    18 CM

## FIG. 1
### PRODUIT FINI SANS AMANDES

## FIG. 2
### PRODUIT FINI AUX AMANDES

FIG.3